(19) Europäisches Patentamt
European Patent Office
Office européen des brevets

(11) Numéro de publication: **0 240 414 B1**

(12) **FASCICULE DE BREVET EUROPEEN**

(45) Date de publication de fascicule du brevet: **29.01.92**

(51) Int. Cl.[5]: **C01B 21/068**, C04B 35/58

(21) Numéro de dépôt: **87400664.6**

(22) Date de dépôt: **25.03.87**

Le dossier contient des informations techniques présentées postérieurement au dépôt de la demande et ne figurant pas dans le présent fascicule.

(54) **Poudres pour céramiques en nitrure de silicium par réduction carbothermique et leur procédé de fabrication.**

(30) Priorité: **03.04.86 FR 8604764**

(43) Date de publication de la demande: **07.10.87 Bulletin 87/41**

(45) Mention de la délivrance du brevet: **29.01.92 Bulletin 92/05**

(84) Etats contractants désignés: **AT BE CH DE ES FR GB GR IT LI LU NL SE**

(56) Documents cités:
**GB-A- 1 028 977**
**US-A- 4 626 422**

**JOURNAL OF THE AMERICAN CERAMIC SOCIETY, vol. 67, no. 10, octobre 1984, pages 691-695, Columbus, Ohio, US; S.C. ZHANG et al.: "Preparation of silicon nitride from silica"**

(73) Titulaire: **ATOCHEM**
**4 & 8, Cours Michelet La Défense 10**
**F-92800 Puteaux(FR)**

(72) Inventeur: **Bachelard, Roland**
**99 Grande rue de la Guillotière**
**F-69007 Lyon(FR)**
Inventeur: **Joubert, Philippe**
**34 Rue Ménival**
**F-69005 Lyon(FR)**

(74) Mandataire: **Rochet, Michel et al**
**ATOCHEM Département Propriété Industrielle La Défense 10 4 & 8 Cours Michelet**
**F-92800 Puteaux(FR)**

**EP 0 240 414 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

L'invention a pour objet des poudres de nitrure de silicium ($Si_3N_4$) utilisables notamment pour la fabrication des céramiques, lesdites poudres étant obtenues par la voie dite réduction carbothermique de silice. L'invention concerne également un procédé de fabrication de telles poudres.

On connaît divers procédés de fabrication de nitrures de silicium pour céramiques. Indépendamment des procédés de laboratoire tel que le procédé faisant appel à des réactions induites par laser ou par plasma, la littérature décrit essentiellement trois voies d'accès, à savoir la réaction en phase gaz, à partir d'halogénosilane et d'ammoniac, la nitruration directe, à partir de silicium et d'azote et la réduction carbothermique en présence d'atmosphère azotée, à partir de silice et de carbone (F.K Van Dijen, R Metselaar & C.A.M. Siskens, SPECHSAAL Vol. 117 n° 7, 1984 pages 627-9). A la différence des techniques laser ou plasma, mentionnées plus haut et qui peuvent conduire à des nitrures de grande surface spécifique, c'est-à-dire pouvant atteindre ou dépasser 100 ou 150 $m^2/g$ (voir par exemple Y. KIZAKI, T. KANDORI et Y. FUJITANI dans Japanese Journal of Applied Physics Vol. 24, n° 7, Juillet 1985, pp 800-805), la voie de la réduction carbothermique conduit à des poudres de faible surface spécifique, c'est-à-dire inférieure à 20 $m^2/g$. (Voir par exemple David L. SEGAL dans Chemistry & Industry, 19 August 1985, pp 544-545 qui donne la valeur de 5 $m^2/g$ ; Shi Chang ZHANG et W. ROGER CANNON dans Journal of American Ceramic Society, Vol. 67 n° 10, pp 691-5 qui indiquent 10,3 $m^2/g$). Dans le brevet anglais 1028977, on propose un procédé de fabrication de $Si_3N_4$, consistant à chauffer du silicium à une température comprise entre 1000 et 1900 °C dans une atmosphère contenant de l'azote en présence de plus de 5% en poids d'un métal choisi parmi les métaux alcaline les métaux alcaline-terreux et ceux ayant un numéro atomique allant de 21 à 30, de 39 à 48 et de 57 à 79. Ce procédé peut être mis en oeuvre en présence d'un agent réducteur tel que le carbone.

L'invention propose une nouvelle famille de poudres de nitrure de silicium par la voie de la réduction carbothermique et nitruration, ces poudres présentant une grande surface spécifique.

L'invention concerne également un procédé de fabrication de telles poudres et les moyens spécifiques mis en oeuvre dans ce procédé.

L'invention a encore pour objet les céramiques obtenues à partir des poudres conformes à l'invention.

Ces nouvelles poudres sont constituées par du nitrure de silicium et sont caractérisées en ce qu'elles présentent une surface spécifique d'au moins 30 $m^2/g$.

L'invention concerne tout spécialement de telles poudres, se présentant sous forme d'agglomérats de dimensions moyennes inférieures à 5 $\mu m$ et constituées de particules élémentaires dont les dimensions moyennes sont comprises entre 10 et 50 nm.

L'invention concerne spécifiquement les poudres dont au moins 50 % présentent une structure cristallisée. L'invention concerne encore des poudres dont la surface spécifique est comprise entre 40 et 250 $m^2/g$.

L'invention a encore pour objet des poudres de $Si_3N_4$ constituées pour 2 à 40 % par une phase $\beta$.

Au sens de l'invention, la surface spécifique est mesurée par application de la méthode B.E.T. d'après BRUNAUER, EMMETT et TELLER J.A.C.S. 60, 309, 1938.

De même la structure cristallisée est appréciée par diffaction des rayons X selon la méthode décrite par C.P. GAZZARA et DR. MESSIER - Bull. Am. Céram. Soc. 56, 777-80, 1977.

La détermination des phases $\beta$ (et $\alpha$) est effectuée par diffractométrie des rayons X (C.P. GAZZARA op.Cit.)

L'invention a également pour objet un procédé de préparation des poudres précitées, et plus précisémment un procédé de fabrication de poudres de surface spécifique élevée et contrôlée, ledit procédé comprenant les étapes suivantes :

a) A partir de silice, d'un liant générant du carbone et le cas échéant de carbone complémentaire, fabrication de granulés à volume poreux contrôlé.

b) Réaction de réduction carbothermique des granulés, obtenus sous a, en présence d'une atmosphère contenant de l'azote.

c) Décarburation.

d) Obtention de poudres.

L'étape a consiste à former des granulés à volume poreux contrôlé. Dans cette opération on met en oeuvre de la silice ($SiO_2$) et un ou plusieurs composés ou éléments apportant du carbone et remplissant une fonction de liant.

D'une manière générale, la granulométrie de la silice est inférieure à 10 $\mu m$ et plus précisémment de l'ordre de 0,1 à 5 $\mu m$.

On peut dans le procédé conforme à l'invention mettre en oeuvre soit d'une part du carbone et d'autre part un liant, soit un liant susceptible d'assurer l'apport de carbone nécessaire à la réaction.

Lorsqu'on utilise à la fois du carbone et un liant, le carbone peut être choisi parmi les différentes variétés de carbone, et notamment le carbone végétal, le noir thermique, le noir d'acétylène, le coke, le noir de fumée, le graphite. D'une manière générale la granulométrie du carbone est inférieure à 10 $\mu m$ et plus précisémment de l'ordre de 0,1 à

5 µm.

Le liant, utilisé seul ou associé au carbone, peut être choisi dans une très grande famille de substances naturelles ou synthétiques se transformant en carbone au plus tard lors de la réaction de réduction carbothermique et susceptibles de favoriser l'agglomération de la silice et, le cas échéant, du carbone en vue de former les granulés. Parmi les produits répondant à cette définition, on citera les goudrons de houille, des résines ou polymères, notamment thermodurcissables tels que les résines phénoliques, par exemple phénolformol, les résines époxy, les polyimides, les polyurées, les polycarbonates.

D'une manière générale, le carbone et/ou le liant au sens donné ci-avant sont utilisés en quantité telle que le rapport molaire

$$\frac{\text{carbone}}{SiO_2}$$

soit supérieur à 1 et de préférence compris entre 2 et 60/1. Lorsqu'on utilise à la fois du carbone et un liant, la quantité de liant représente au moins 2 % du poids du mélange silice + carbone.

La silice, le carbone et/ou le liant subissent une opération de mélangeage et malaxage. L'opération peut être effectuée dans une large gamme de température, pouvant aller par exemple de la température ambiante à 200° C, le choix de la température étant, entre autre, conditionné par la mise en oeuvre du liant.

A la suite de cette opération, la pâte formée est avantageusement mise en forme, notamment par extrusion, les particules obtenues, par exemple après découpage ou broyage du jonc formé par l'extrudeuse, étant avantageusement portées à une température permettant d'obtenir le séchage et/ou le durcissement et/ou la polymérisation du liant, température pouvant se situer entre 50 et 250° C par exemple, lesdites particules pouvant ensuite être agglomérées sous forme de granulés. Dans le procédé conforme à l'invention, on peut, par action sur la quantité du liant mis en oeuvre et/ou par action sur les conditions de température et/ou de pression (par exemple entre 2 et 200 bars) lors de la confection des granulés régler de manière précise le volume poreux des granulés ultérieurement soumis à la réduction carbothermique.

Selon une variante, le liant peut être cokéfié, par exemple entre 350 et 500° C avant la réaction de réduction carbothermique.

Ces granulés à volume poreux contrôle, et plus précisémment de tels granulés, comprenant un mélange aggloméré de silice, de liant générant de carbone comme défini précédemment et, le cas échéant, le carbone complémentaire ou de liant cokéfié, présentent un volume poreux dont la valeur est choisie entre 0,1 et 3 $cm^3/g$ (mesure effectuée au porosimètre à mercure dans la zone de 0 à 2.000 bars).

Ces granulés peuvent se présenter sous forme de pastilles, de cylindres ou plus généralement de particules à forme régulière ou irrégulière. D'une manière générale, la plus grande dimension de ces granulés est supérieure à 0,5 mm et de préférence comprise entre 1 et 30 mm, ces valeurs n'étant données qu'à titre indicatif. De tels granulés ainsi définis constituent, à titre de moyen spécifique de procédé de fabrication des poudres ultrafines conformes à l'invention, un autre objet de ladite invention.

Dans l'étape b du procédé, la silice, le liant et, le cas échéant le carbone, mélangés et agglomérés sous forme de granulés selon a ci-avant sont soumis à une réaction de réduction carbothermique. D'une manière générale, cette opération peut s'effectuer à une température pouvant être comprise entre 1.300 et 1.500° C. Cette réaction s'effectue en présence d'une atmosphère contenant de l'azote ou libérant de l'azote dans les conditions de la réaction. On utilise avantageusement un excès d'azote pouvant aller de 2 à 10 fois la stoechiométrie de la réaction, valeurs devant être considérées comme constituant un ordre de grandeur.

La réaction de réduction carbothermique libérant de l'oxygène (sous forme de CO notamment), la poursuite de la réaction jusqu'à transformation de la totalité de la silice pourra être suivie par contrôle de l'émission de CO.

L'étape c est une opération de décarburation, dans le but d'éliminer l'excès de carbone apporté par le liant et, éventuellement, directement sous forme de carbone. Cette opération peut être avantageusement effectuée à une température comprise entre 500 et 800° c. Elle sera de préférence poursuivie jusqu'à consommation de la totalité du carbone, ladite consommation pouvant être suivie par contrôle de l'émission de gaz de combustion, c'est-à-dire CO et $CO_2$.

A l'issue de l'opération de décarburation, on recueille (étape d) les nitrures conformes à l'invention, c'est-à-dire sous forme de particules ou d'agglomérats de particules présentant une exceptionnelle surface spécifique. On peut, le cas échéant, procéder à une opération de désagglomération ou plus précisémment d'uniformisation des dimensions moyennes des agglomérats, par exemple par broyage et tamisage.

Ainsi qu'il a été précisé, les poudres de nitrures de silicium conformes à l'invention constituent une nouvelle famille de poudres de $Si_3N_4$ par la voie de réduction carbothermique et, nitruration, dans la mesure où de telles poudres présentent une surface spécifique, accessible de manière reproductible, sans commune mesure avec les surfaces spécifiques des poudres de $Si_3N_4$ par réduction carbothermique décrites à ce jour. Ces nouvelles poudres constituent des matériaux de choix pour la fabrication de céramiques, leurs propriétés permettant notamment un frittage aisé et l'obtention de pièces frittées à grande densité.

Les exemples suivants donnés à titre purement indicatif, illustrent l'invention.

EXEMPLE 1

Dans un malaxeur, on mélange 115 g d'une poudre de silice dont les caractéristiques sont les suivantes :

- Aire spécifique : 180 $m^2.g^{-1}$
- Diamètre médian : 2$\mu$m
- Perte au feu : 11,46 %
- Teneur en Si : 40,53 %

avec 300 g de noir de carbone ex-acétylène dont les caractéristiques sont :

- Aire spécifique : 64 $m^2.g^{-1}$
- Diamètre médian : <3$\mu$m
- Pureté : >99 %

Le malaxeur est pourvu d'une enveloppe chauffante dans laquelle on fait circuler un caloporteur porté vers 80 °C. Dans le but d'obtenir une masse extrudable, on additionne progressivement au mélange des poudres maintenues en mouvement, 660 g de goudron de pin. Lorsque la pâte ainsi constituée présente un aspect homogène et une rhéologie stable, elle est extrudée sous forme de joncs de 5 mm de diamètre dans un appareil qui permet d'appliquer une pression d'environ 80 bars.

Ces extrudats sont tout d'abord séchés progressivement à l'air entre la température embiante et 200 °C. Puis lorsqu'ils ont acquis une consistance solide, ils sont cokéfiés par traitement thermique à 400 °C dans un courant d'azote. A l'issue de ces opérations de séchage-cokéfaction, la perte de masse est de 46,6 %.

398 g de ces extrudats durs sont ensuite soumis à une réduction carbothermique en atmosphère d'azote. Pour celà, les extrudats dont le volume poreux est de 0,73 $cm^3.g^{-1}$, sont placés dans un réacteur cylindrique parcouru par un courant d'azote d'un débit de 0,300 $m^3.h^{-1}$. Un programme d'élévation de température est appliqué qui permet de porter la charge à la température de 1.400 °C en 1 h 30 mn. Cette température est maintenue pendant 5 heures puis le chauffage est coupé et on laisse le produit se refroidir sous balayage d'azote. On constate alors que le produit se présente toujours sous la forme de granulés noirs offrant une bonne tenue mécanique. On en recueille 314 g.

Ces extrudats sont portés à une température progressivement élevée à 700 °C sous courant d'air et maintenue à cette température pendant 15 heures. Après refroidissement, on recueille 48 g d'une poudre légèrement beige et dont l'analyse par diffraction des rayons X révèle qu'elle ne contient pas de quantité décelable de silice cristallisée (quartz ou cristoballite) pas plus que de carbone résiduaire.

En revanche, on détecte la présence des 2 variétés cristallisées du nitrure de silicium ainsi qu'une phase amorphe. Une estimation des teneurs respectives en ces divers constituants a été effectuée selon la méthode décrite par C.P. GAZZARA et D.R. MESSIER, Bull. Am.Ceram.Soc. 56, 777-80, 1977.

On trouve :

$Si_3N_4$ amorphe ~ 20 %

$\alpha$ $Si_3N_4$ ~ 45 %

$\beta$ $Si_3N_4$ ~ 35 %

La surface spécifique de cette poudre déterminée selon la méthode BET est de 88,8 $m^2.g^{-1}$.

EXEMPLE 2

Dans un malaxeur à deux bras, similaire à celui utilisé dans l'exemple 1, on mélange 150 g de silice avec 400 g de noir de carbone ex-acétylène (produits de l'exemple 1). Puis on ajoute progressivement une solution aqueuse de résine phénolique (marque déposée Fen-0-Fen) : 126 g de résine pure et 24 g de catalyseur de polymérisation sont ainsi incorporés au mélange afin de lui conférer la consistance adéquate. Le fond de la cuve de malaxage comporte une vis d'extrusion avec laquelle la pâte est filée sous forme d'extrudats de 6 mm de diamètre.

Ceux-ci sont alors séchés à 150 °C dans une étuve à vide. Au cours de ce traitement, la résine polymérise et les extrudats durcissent. Leur volume poreux déterminé par porosimétrie au mercure est de 1,46 $cm^3.g^{-1}$.

Ils sont ensuite réimprégnés par la même résine phénolique sous la forme d'une solution méthanolique à 20 % en poids de polymère. On en incorpore de la sorte 30,9 % du poids des granulés mesuré après séchage à l'étuve. Le volume poreux des granulés séché à 120 °C est ainsi ramené à 0,97 $cm^3.g^{-1}$. Une aliquote de 10 g de ces extrudats est placée dans un réacteur vertical parcouru par un courant d'azote dont le débit est d'environ 20 litres par heure.

Les granulés sont alors portés à 1.400 °C en 2 heures et 10 mn, puis maintenus pendant 5 heures à cette température. Après refroidissement, 7,97 g de produit, toujours sous la forme de granulés, sont recueillis.

L'excès de carbone est ensuite éliminé par combustion dans l'air. L'opération est réalisée comme dans l'exemple 1. Le résidu final pèse 1,22 g.

L'analyse qui en est faite par diffraction des rayons X révèle que la totalité de la silice a été attaquée, que le carbone a été entièrement éliminé et qu'il ne s'est pas formé d'oxynitrure $Si_2N_2O$.

En appliquant la méthode décrite précédemment, on dose :

- 55 % de $\alpha$ $Si_3N_4$.
- 15 % de $\beta$ $Si_3N_4$.
- 30 % de $Si_3N_4$ amorphe.

Le nitrure de silicium ainsi préparé présente une surface spécifique de 59 $m^2.g^{-1}$.

EXEMPLE 3

On opère comme dans l'exemple 2.

Mais la teneur en résine phénolique introduite par imprégnations successives avec la solution méthanolique est portée à 104 % de la masse des granulés initiaux. Le volume poreux des granulés est de 0,48 $cm^3.g^{-1}$. Une aliquote de 10 g est soumise à la réduction carbothermique dans les mêmes conditions que dans l'exemple 2. Le produit de réaction pèse 6,46 g. Il contient un important excès de carbone qui est éliminé par combustion selon la même procédure que précédemment. Le résidu final pèse 0,74 g.

L'analyse de phases permet de constater que la silice a été entièrement attaquée et que le carbone a complètement disparu. Les seules phases cristallisées détectables sont les variétés $\alpha$ et $\beta$ de $Si_3N_4$ ; elles sont accompagnées d'une partie amorphe majoritaire. On dose en effet environ 40 % de $\alpha$ $Si_3N_4$ et 10 % de $\beta$ $Si_3N_4$. L'aire spécifique de ce nitrure de silicium est de 92 $m^2.g^{-1}$.

## Revendications

**1.** Poudres de nitrure de silicium $Si_3N_4$ par voie de réduction carbothermique et nitruration de silice utilisables notamment pour la fabrication de céramiques, caractérisées en ce qu'elles présentent une surface spécifique d'au moins 30 $m^2/g$.

**2.** Poudres selon la revendication 1, caractérisées en ce qu'elles se présentent sous forme d'agglomérats de dimensions moyennes inférieures à 5 $\mu m$ et constituées de particules élémentaires dont les dimensions moyennes sont comprises entre 10 et 50 nm.

**3.** Poudres selon l'une quelconque des revendications 1 ou 2, caractérisées en ce qu'au moins 50 % desdites poudres présentent une structure cristallisée.

**4.** Poudres selon l'une quelconque des revendications 1 à 3, caractérisées en ce que leur surface spécifique est comprise entre 40 et 250 $m^2/g$.

**5.** Poudres selon l'une quelconque des revendications 1 à 4, caractérisées en ce qu'elles sont constituées pour 2 à 40 % par une phase $\beta$.

**6.** Procédé de fabrication des poudres selon l'une des revendications 1 à 5, caractérisé en ce qu'il comprend les étapes suivantes :

a) A partir de silice , d'un liant générant du carbone au plus tard lors de la réaction de réduction carbothermique et, le cas échéant, de carbone complémentaire, fabrication de granulés dont le volume poreux est compris entre 0,1 et 3 $cm^3/g$ par measure du porosimètre à mercure dans la zone de 0 à 2000 bars,

b) Réaction de réduction carbothermique des granulés obtenus sous a, en présence d'un atmosphère contenant de l'azote.

c) Décarburation.

d) Obtention de poudres.

**7.** Procédé selon la revendication 6, caractérisé en ce que la granulométrie de la silice est inférieure à 10 $\mu m$.

**8.** Procédé selon l'une quelconque des revendications 6 et 7, caractérisé en ce qu'on met en oeuvre à la fois du carbone et un liant.

**9.** Procédé selon la revendication 8, caractérisé en ce que le carbone est choisi dans le groupe constitué par le carbone végétal, le noir thermique, le noir d'acétylène, le coke, le noir de fumée, le graphite.

**10.** Procédé selon l'une quelconque des revendications 6 et 7, caractérisé en ce qu'on ne met en oeuvre qu'un liant générant du carbone.

**11.** Procédé selon l'une quelconque des revendications 6 à 10, caractérisé en ce que le liant est choisi parmi les substances naturelles ou synthétiques se transformant en carbone dans les conditions de la réaction de réduction carbothermique et susceptibles de favoriser l'agglomération de la silice.

**12.** Procédé selon la revendication 11, caractérisé en ce que le liant est choisi dans le groupe constitué par les goudrons de houille, les résines on polymères, notamment thermodurcissables tels que les résines phénoliques, par exemple phénolformol, les résines époxy, les polyimides, les polyurées, les polycarbonates.

**13.** Procédé selon l'une quelconque des revendications 6 à 13, caractérisé en ce que le liant additionné le cas échéant de carbone, est utilisé en quantité telle que le rapport molaire

$$\frac{\text{carbone}}{SiO_2}$$

soit supérieur à 1 et de préférence compris entre 2 et 60/1.

**14.** Procédé selon l'une quelconque des revendications 8 et 9, caractérisé en ce que la quantité de liant représente au moins 2 % du poids du mélange silice + carbone.

**15.** A titre de moyen spécifique pour la mise en oeuvre du procédé selon la revendication 6, des granulés constitués par un mélange aggloméré de silice, de liant générant du carbone et, le cas échéant de carbone, lesdits granulés présentant un volume poreaux dont la valeur est choisie entre 0,1 et 3 cm$^3$/g.

**16.** Granulés selon la revendication 15, caractérisés en ce qu'ils se présentent sous forme de pastilles, cylindres ou particules à forme régulière ou irrégulière dont la plus grande dimension est supérieure à 0,5 mm.

**17.** Granulés selon l'une quelconque des revendications 15 ou 16, caractérisés en ce que leur plus grande dimension est comprise entre 1 et 30 mm.

**18.** Application des poudres de $Si_3N_4$ selon l'une quelconque des revendications 1 à 5 à la fabrication de céramiques.

**Claims**

**1.** Silicon nitride $Si_3N_4$ powders obtained by carbothermic reduction and nitridation of silica which can be used especially for the manufacture of ceramics, characterised in that they have a specific surface area of at least 30 m$^2$/g.

**2.** Powders according to Claim 1, characterised in that they are in the form of agglomerates of mean dimensions of less than 5 $\mu$m and consist of elementary particles the mean dimensions of which are between 10 and 50 nm.

**3.** Powders according to either of Claims 1 or 2, characterised in that at least 50 % of the said powders have a crystalline structure.

**4.** Powders according to any one of Claims 1 to 3, characterised in that their specific surface area is between 40 and 250 m$^2$/g.

**5.** Powders according to any one of Claims 1 to 4, characterised in that 2 to 40 % of them are made up of a $\beta$ phase.

**6.** Process for the manufacture of powders according to one of Claims 1 to 5, characterised in that it consists in the following stages:

a) preparation of granules having a pore volume of between 0.1 and 3 cm$^3$/g by determination with a mercury porometer in the range 0 to 2000 bars, using silica, a binder which produces carbon not later than during the carbothermic reduction reaction and, where appropriate, additional carbon.

b) Carbothermic reduction reaction of granules obtained in a, in the presence of an atmosphere containing nitrogen.

c) Decarbonisation.

d) Obtaining the powders.

**7.** Process according to Claim 6, characterised in that the particle size of the silica is less than 10 $\mu$m.

**8.** Process according to either of Claims 6 and 7, characterised in that the carbon and a binder are employed at the same time.

**9.** Process according to Claim 8, characterised in that the carbon is chosen from the group consisting of vegetable carbon, thermal black, acetylene black, coke, lampblack and graphite.

**10.** Process according to either of Claims 6 and 7, characterised in that only a binder producing carbon is employed.

**11.** Process according to any one of Claims 6 to 10, characterised in that the binder is chosen from natural or synthetic substances which are transformed into carbon under the conditions of the carbothermic reduction reaction and are capable of promoting the agglomeration of the silica.

**12.** Process according to Claim 11, characterised in that the binder is chosen from the group consisting of coal tars, resins or polymers, especially thermosetting such as phenolic resins, for example phenolformol, epoxy resins, polyimides, polyureas and polycarbonates.

**13.** Process according to any one of Claims 6 to 12, characterised in that the binder, with added carbon when appropriate, is used in a quantity such that the molar ratio carbon/$SiO_2$ is greater than 1 and, preferably, between 2 and 60/1.

**14.** Process according to either of Claims 8 and 9, characterised in that the quantity of binder represents at least 2 % of the weight of the silica + carbon mixture.

**15.** By way of specific means for the accomplishment of the process according to Claim 6, granules consisting of an agglomerated mixture of silica, binder which produces carbon and, where appropriate, carbon, the said granules having a pore volume the value of which is chosen between 0.1 and 3 $cm^3$/g.

**16.** Granules according to Claim 15, characterised in that they are in the form of pastilles, cylinders or particles of regular or irregular shape the largest dimension of which is greater than 0.5 mm.

**17.** Granules according to either of Claims 15 and 16, characterised in that their largest dimension is between 1 and 30 mm.

**18.** Application of $Si_3N_4$ powders according to one of Claims 1 to 5 to the manufacture of ceramics.

**Patentansprüche**

**1.** Durch carbothermische Reduktion und Nitridieren von Siliziumdioxid erhaltene Pulver aus Siliziumnitrid $Si_3N_4$, das insbesondere zur Herstellung von Keramik verwendbar ist, dadurch gekennzeichnet, daß sie eine spezifische Oberfläche von wenigstens 30 $m^2$/g aufweisen.

**2.** Pulver nach Anspruch 1, dadurch gekennzeichnet, daß sie in Form von Agglomeraten mit einer mittleren unteren Größe von 5 $\mu$m vorliegen und aus Elementarpartikeln mit einer mittleren Größe zwischen 10 und 50 nm bestehen.

**3.** Pulver nach einem der Ansprüche 1 oder 2, dadurch gekennzeichnet, daß wenigstens 50 % der Pulver eine Kristallstruktur aufweisen.

**4.** Pulver nach einem der Ansprüche 1 bis 3, dadurch gekennzeichnet, daß ihre spezifische Oberfläche zwischen 40 und 250 $m^2$/g liegt.

**5.** Pulver nach einem der Ansprüche 1 bis 4, dadurch gekennzeichnet, daß sie zu 2 bis 40 % aus der ß-Phase bestehen.

**6.** Verfahren zur Herstellung von Pulvern nach einem der Ansprüche 1 bis 5, dadurch gekennzeichnet, daß es folgende Schritte umfaßt:

a) Herstellung von Granulaten, deren porosimetrisch mit Quecksilber im Bereich von 0 bis 2000 bar gemessenes Porenvolumen zwischen 0,1 und 3 $cm^3$/g liegt, aus Siliziumdioxid, einem spätestens bei der carbothermischen Reduktion Kohlenstoff liefernden Bindemittel und gegebenenfalls zusätzlichem Kohlenstoff

b) Reaktion der carbothermischen Reduktion der nach a) erhaltenen Granulate in Gegenwart einer Stickstoff enthaltenden Atmosphäre

c) Entkohlung

d) Herstellung von Pulvern.

**7.** Verfahren nach Anspruch 6, dadurch gekennzeichnet, daß die Korngröße des Siliziumdioxids kleiner als 10 $\mu$m ist.

**8.** Verfahren nach einem der Ansprüche 6 und 7, dadurch gekennzeichnet, daß man gleichzeitig Kohlenstoff und ein Bindemittel einsetzt.

**9.** Verfahren nach Anspruch 8, dadurch gekennzeichnet, daß der Kohlenstoff aus der aus pflanzlichem Kohlenstoff, Thermalruß, Acetylenruß, Koks, Ruß und Graphit bestehenden Gruppe ausgewählt ist.

**10.** Verfahren nach einem der Ansprüche 6 und 7, dadurch gekennzeichnet, daß man ein Kohlenstoff bildendes Bindemittel einsetzt.

**11.** Verfahren nach einem der Ansprüche 6 bis 10, dadurch gekennzeichnet, daß das Bindemittel unter natürlichen und synthetischen Stoffen ausgewählt ist, die sich unter den Bedingungen der Reaktion der carbothermischen Reduktion in Kohlenstoff umwandeln und die die Agglomeration des Siliziumdioxids begünstigen können.

**12.** Verfahren nach Anspruch 11, dadurch gekennzeichnet, daß das Bindemittel aus der aus Steinkohlenteeren, Harzen oder Polymeren, insbesondere wärmehärtbaren wie Phenolharzen, zum Beispiel Phenolformaldehydharzen, den Epoxyharzen, Polyimiden, Polyharnstoffen und Polycarbonaten bestehenden Gruppe, ausgewählt ist.

**13.** Verfahren nach einem der Ansprüche 6 bis 13, dadurch gekennzeichnet, daß das im Falle von

Kohlenstoff hinzugefügte Bindemittel in einer solchen Menge verwendet wird, daß das Molverhältnis

$$\frac{\text{Kohlenstoff}}{SiO_2}$$

über 1 ist und vorzugsweise zwischen 2 und 60 zu 1 liegt.

**14.** Verfahren nach einem der Ansprüche 8 und 9, dadurch gekennzeichnet, daß die Bindemittelmenge wenigstens 2 Gew.% des Siliziumdioxid + Kohlenstoff-Gemisches beträgt.

**15.** Als spezifische Mittel für die Anwendung des Verfahrens nach Anspruch 6, haben die aus einem agglomerierten Gemisch aus Siliziumdioxid, einem Kohlenstoff bildenden Bindemittel und gegebenenfalls Kohlenstoff bestehenden Granulate ein Porenvolumen, dessen Wert zwischen 0,1 und 3 $cm^3/g$ ausgewählt ist.

**16.** Granulate nach Anspruch 15, dadurch gekennzeichnet, daß sie in Form von Tabletten, Zylindern oder Partikeln mit gleichmäßiger oder ungleichmäßiger Form vorliegen, deren größte Abmessung über 0,5 mm liegt.

**17.** Granulate nach einem der Ansprüche 15 oder 16, dadurch gekennzeichnet, daß ihre größte Abmessung zwischen 1 und 30 mm liegt.

**18.** Anwendung der Pulver aus $Si_3N_4$ gemäß einem der Ansprüche 1 bis 5 zur Herstellung von Keramik.